# EUROPEAN PATENT APPLICATION

(11) **EP 3 636 511 A1**
(43) Date of publication of application: **15.04.2020**
(21) Application number: 17934991.5
(22) Date of filing: 28.12.2017
(51) Int. Cl.: B61H 11/06, B60T 13/68

(54) **TRAIN BRAKE RELEASE SYSTEM AND TRAIN**

(30) Priority: 13.12.2017 CN 201711328315
(71) Applicant: CRRC Changchun Railway Vehicles Co., Ltd., Changchun, Jilin 130000 (CN)
(72) Inventor: QIAO, Feng, Jilin 130000 (CN); XIN, Zhiqiang, Jilin 130000 (CN); ZHAO, Yangkun, Jilin 130000 (CN); MA, Yongjing, Jilin 130000 (CN)
(74) Representative: Mewburn Ellis LLP
(86) International application number: PCT/CN2017/119176
(87) International publication number: WO 2019/114038

(57) **Abstract**

A train brake release system and a train provided with the train brake release system. The train brake release system comprises: an external input port (10) for introducing compressed gas, an input end being connected to an output end of the external input port (10); a gas brake release device (20) for outputting the compressed gas when the compressed gas flowing therethrough has a preset gas pressure; an electronic brake release device (30) for adjusting the original brake gas pressure flowing therethrough according to the received brake release signal, so as to obtain the adjusted brake gas pressure; and a circuit switching valve (40) connected to the electronic brake release device (30) or the gas brake release device (20) according to the actual operating state of the train. The present system can significantly improve the efficiency of brake release, without consuming valuable manpower, greatly reducing the probability of accidental situations, enhancing the safety stability of a train.

## Description

The present application claims priority to Chinese Patent Application No. 201711328315.9, titled "TRAIN BRAKE RELEASE SYSTEM AND TRAIN", filed on December 13, 2017 with the Chinese Patent Office, which is incorporated herein by reference in its entirety.

### FIELD

The present disclosure relates to the technical field of train braking, and in particular to a train brake-releasing system and a train.

### BACKGROUND

With the continuous development in the field of high-speed trains, more and more people choose high-speed trains and more and more high-speed train services are provided, because people all prefer to more convenient and comfortable, faster and safer travels. Therefore, a researching direction for those skilled in the art is to improve convenience and comfort while ensuring safety of high-speed trains.

In a case where a high-speed train is powered abnormally due to a failure of the train, a pressure in a brake cylinder of the train is increased with a decrease of a pressure in a brake pipe. Under the increasing pressure in the brake cylinder, the train is stopped quickly by an increasing brake force, to prevent an uncontrollable situation of the train that may cause more serious consequence. In this case, since the failed train is stopped on the railway abnormally, the running of other trains may be affected, which is quite dangerous. Therefore, it is required to tow the failed train to a safe region.

However, due to the abnormal power, wheels of each car of the train gets into a brake state and electronic brake-releasing devices normally provided for the train cannot be started, in which case only manual labor can be used to turn on a forcing brake-releasing switch on each car of the train successively in order to tow the train in a brake-releasing state to the safe region by a traction locomotive. This method is extremely time-consuming and labor-intensive. Normally it takes more than one hour to perform brake-releasing for all the cars of a 12-section train, which is inconvenient and increases occurrences of accidents.

Therefore, an urgent issue to be solved by those skilled in the art is how to overcome the above defects in the existing train brake-releasing device.

### SUMMARY

An object of the present disclosure is to provide a train brake-releasing system. The train brake-releasing system is additionally provided with a gas brake-releasing device on the basis of an original arrangement of only an electronic brake-releasing device, and an external compressed gas input port and a transmission pipe are provided accordingly, such that the gas brake-releasing device can be activated by means of a compressed gas having a preset pressure provided by a traction locomotive, to release a train in a brake state quickly. With the train brake-releasing system, efficiency of brake-releasing is significantly improved without expending manpower, thereby greatly reducing occurrences of accidents and improving safety and stability of the train.

Another object of the present disclosure is to provide a train arranged with the above-described train brake-releasing system.

In order to realize the above-described objects, a train brake-releasing system is provided according to the present disclosure, which includes:
an external input port configured to input a compressed gas having a preset pressure from outside;
a gas brake-releasing device, where an input end of the gas brake-releasing device is connected to an output end of the external input port, and the gas brake-releasing device is configured to output the compressed gas flowing through the gas brake-releasing device in a case where a pressure of the compressed gas reaches the preset pressure;
an electronic brake-releasing device configured to adjust a compressed gas having an original brake pressure and flowing through the electronic brake-releasing device in response to a received brake-releasing signal to obtain an adjusted brake pressure; and
a loop switching valve configured to connect with the electronic brake-releasing device or the gas brake-releasing device based on an actual operation state of a train, where the loop switching valve includes a first input end connected to an output end of the electronic brake-releasing device and a second input end connected to an output end of the gas brake-releasing device, and the loop switching valve operates in a first operation mode and a second operation mode, where
in the first operation mode, the train is powered normally, the first output end is connected to the electronic brake-releasing device, and the second input end is disconnected from the gas brake-releasing device; and
in the second operation mode, the train is powered abnormally, the second input end is connected to the gas brake-releasing device and the first output end is disconnected from the electronic brake-releasing device.

Optionally, the train brake-releasing system further includes an external compressed gas transmission pipe, where an input end of the external compressed gas transmission pipe is connected to the output end of the external input port and an output end of the external compressed gas transmission pipe is connected to the input end of the gas brake-releasing device, the train brake-releasing system is configured to transmit the compressed gas inputted to the external input port to the gas brake-releasing device.

Optionally, the train brake-releasing system further includes a brake-releasing actuator mechanism connected to an output end of the loop switching valve and configured to perform brake-releasing on braked wheels of the train by means of the transmitted compressed gas.

Optionally, the train brake-releasing system further includes: a pressure detector connected to the external compressed gas transmission pipe and configured to detect and display a pressure of the compressed gas to be transmitted to the gas brake-releasing device; and an emergency power supply, connected to the pressure detector and configured to supply electric power required by the pressure detector for normal operation.

Optionally, the external input port is arranged on a body surface of a preset car.

Optionally, the input end of the external input port points obliquely upward and the external input port has a preset inclination angle with respect to a horizontal plane.

Optionally, the output end of the external input port is rotatably connected to the input end of the external compressed gas transmission pipe, to make the external input port rotatable with respect to the external compressed gas transmission pipe to a position obliquely downward.

Optionally, the loop switching valve is an electromagnetic valve.

Optionally, the gas brake-releasing device is a pressure piston valve.

In order to realize the above-described objects, a train is also provided according to the present disclosure, which includes a train body and a control system provided with the train brake-releasing system described above.

A train brake-releasing system provided in the present disclosure includes:
an external input port configured to input a compressed gas having a preset pressure provided from outside;
a gas brake-releasing device, having an input end connected to an output end of the external input port, and configured to output the compressed gas flowing through the gas brake-releasing device in a case where a pressure of the compressed gas reaches the preset pressure;
an electronic brake-releasing device configured to adjust a compressed gas having an original brake pressure and flowing through the electronic brake-releasing device in response to a received brake-releasing signal to obtain an adjusted brake pressure; and
a loop switching valve configured to connect with the electronic brake-releasing device or the gas brake-releasing device based on an actual operation state of a train, where the loop switching valve includes a first input end connected to an output end of the electronic brake-releasing device and a second input end connected to an output end of the gas brake-releasing device, and the loop switching valve operates in a first operation mode and a second operation mode, where
in the first operation mode, the train is powered normally, the first output end is connected to the electronic brake-releasing device, and the second input end is disconnected from the gas brake-releasing device; and
in the second operation mode, the train is powered abnormally, the second input end is connected to the gas brake-releasing device and the first output end is disconnected from the electronic brake-releasing device.

Apparently, the train brake-releasing system is additionally provided with a gas brake-releasing device on the basis of an original arrangement of only an electronic brake-releasing device, and an external compressed gas input port and a transmission pipe are provided accordingly, such that the gas brake-releasing device can be activated by means of a compressed gas having a preset pressure provided by a traction locomotive, to release a train in a brake state quickly. With the train brake-releasing system, efficiency of brake-releasing is significantly improved without expending manpower, thereby greatly reducing occurrences of accidents and improving safety and stability of the train. A train arranged with the above-described train brake-releasing system is also provided according to the present disclosure, which can achieve the above beneficial effects and is not described herein.

### BRIEF DESCRIPTION OF THE DRAWINGS

In order to more clearly describe the technical solution in the embodiments of the present disclosure or the technical solution in the conventional technology, drawings to be used in the embodiments of the present disclosure or in the conventional technology are briefly described hereinafter. It is apparent that the drawings described below show merely the embodiments of the present disclosure, and those skilled in the art may obtain other drawings according to the provided drawings without any creative effort.
Figure 1 is a schematic configuration diagram of a train brake-releasing system according to an embodiment of the present disclosure;
Figure 2 is a schematic configuration diagram of a train brake-releasing system according to another embodiment of the present disclosure;
Figure 3 is a schematic configuration diagram of a train brake-releasing system according to still another embodiment of the present disclosure;
Figure 4 is a schematic configuration diagram of an external input port according to an embodiment of the present disclosure;
Figure 5 is a schematic configuration diagram of an external input port according to another embodiment of the present disclosure; and
Figure 6 is a schematic diagram of a circuit of a real train brake-releasing system according to an embodiment of the present disclosure.

In the drawings:
- 10.: External input port
- 20.: Gas brake-releasing device
- 30.: Electronic brake-releasing device
- 40.: Loop switching valve
- 50.: Brake-releasing actuator mechanism
- 60.: External compressed gas transmission pipe
- 41.: First input end
- 42.: Second input end
- 43.: Output end
- 61.: Pressure detector
- 62.: Emergency power supply

### DETAILED DESCRIPTION OF EMBODIMENTS

A kernel of the present disclosure is to provide a train brake-releasing system and a train. The train brake-releasing system is additionally provided with a gas brake-releasing device on the basis of an original arrangement of only an electronic brake-releasing device, and an external compressed gas input port and a transmission pipe are provided accordingly, such that the gas brake-releasing device can be activated by means of a compressed gas having a preset pressure provided by a traction locomotive, so as to release a train in a brake state quickly. With the train brake-releasing system, efficiency of brake-releasing is significantly improved without expending manpower, thereby greatly reducing occurrences of accidents and improving safety and stability of the train.

In order to make the objects, features and advantages of the present disclosure clearer, the technical solutions in the embodiments of the present disclosure are described clearly and completely in conjunction with the accompanying drawings in the embodiments of the present disclosure hereinafter. It is apparent that the below-described embodiments are merely some rather than all of embodiments of the present disclosure. All other embodiments obtained by those skilled in the art based on the embodiments in the present disclosure without any creative work should fall within the protection scope of the present disclosure.

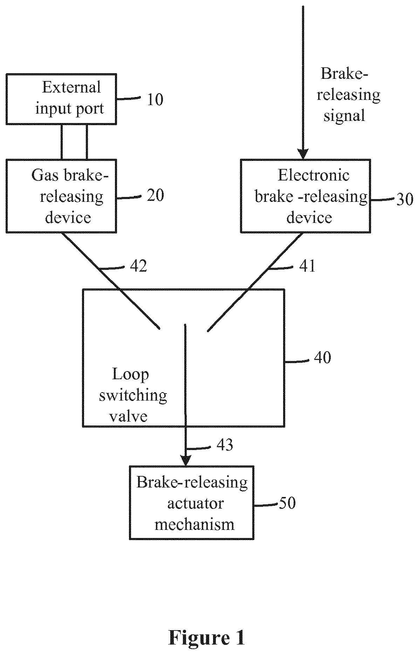

Reference is made to Figure 1, which is a schematic configuration diagram of a train brake-releasing system according to an embodiment of the present disclosure.

The train brake-releasing system includes an external input port 10.

The external input port 10 is configured to input a compressed gas having a preset pressure.

The external input port 10 is used to introduce the compressed gas having the preset pressure provided by a traction locomotive. The external input port may be arranged on an outer surface of a predetermined car of the train to receive the compressed gas from outside.

That is, the external input port 10 may be arranged on an outer surface of a car of the train to connect to a transmission pipe extending from the traction locomotive. The car to be arranged with the external input port 10 may be determined according to actual situations. Further, multiple external input ports 10 may be arranged. For example, the external input ports may be arranged on both the left and right sides of the outer surface of a car, or arranged on a same side of the outer surface of the car. Furthermore, whether to arrange more external input ports 10 may be determined according to actual situations and special requirements.

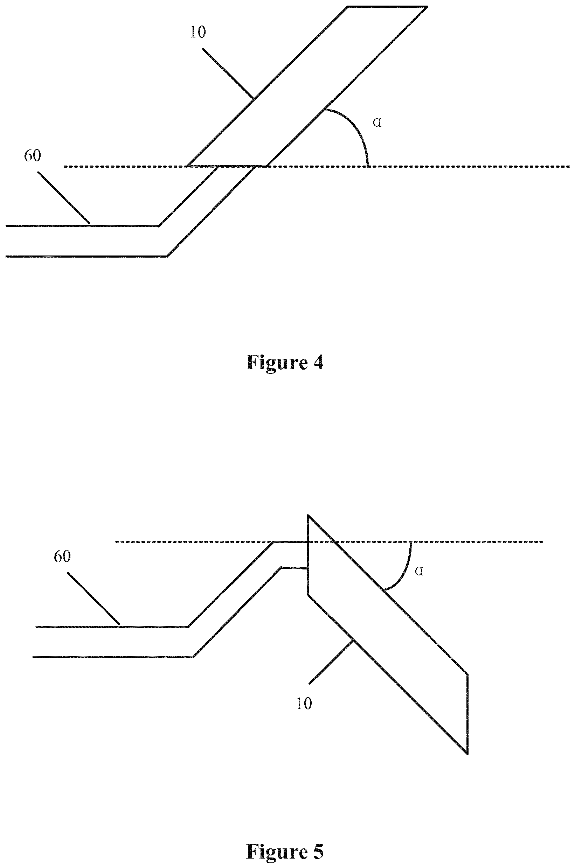

Optionally, the input end of the external input port 10 points obliquely upward and the external input port 10 has a preset inclination angle with respect to a horizontal plane. That is, the external input port 10 may have an inclination angle α with respect to a horizontal plane of a car body as shown in Figure 4. In addition, the external input port 10 may be simply vertical or parallel to the horizontal plane of the car body. An advantage of the incline solution over the vertical or parallel solution is that, the external input port 10 having a preset inclination angle with respect to the horizontal plane does not extend too far beyond the top of the car or the sides of the car, so as to be adaptive to a case of passing through a tunnel.

Since the train may travel in various weather conditions and the external input port 10 is arranged on the outer surface of the car, the solution as shown in Figure 4 may lead to that rain water easily enters from outside through the external input port 10 under a rainy or snowy weather, then enters in the external compressed gas transmission pipe 60 with movement of the train, thereby resulting in dangers. Therefore, the output end of the external input port 10 may be rotatably connected to the input end of the external compressed gas transmission pipe 60, that is, the external input port 10 can be rotated relative to the external compressed gas transmission pipe 60 to a position obliquely downward. In other words, the external input port 10 can be gradually rotated from an orientation shown in Figure 4 to an orientation shown in Figure 5, that is, the orientation of the external input port 10 can be changed from an orientation obliquely upward to an orientation obliquely downward, to prevent the entry of rain water. Alternatively, the external input port 10, which is a part of a backup brake-releasing apparatus useless in a normal condition, may be configured to be detachable and installed as needed.

The train brake-releasing system also includes a gas brake-releasing device 20. The gas brake-releasing device 20 has an input end connected to the output end of the external input port, and is configured to output a compressed gas flowing through the gas brake-releasing device 20 when the compressed gas reaches a preset pressure.

The gas brake-releasing device 20 functions to perform brake-releasing on braked wheels by a purely physical mechanical structure under a condition of no electric power, to solve the problem that it is required to perform the brake-releasing manually.

Specifically, the gas brake-releasing device 20 may be a pressure piston valve, which is a type of piston valve controlled to be turned on or off based on a pressure of an inputted compressed gas. In the present disclosure, the gas brake-releasing device 20 is switched from an off state to an on state when the compressed gas having the preset pressure is inputted, so that the compressed gas having the preset pressure passes through the pressure piston valve to be transmitted to a downstream brake-releasing executor mechanism 50, so as to perform brake-releasing on the braked wheels of the train.

In simple words, only the compressed gas reaching the preset pressure can pass through the pressure piston valve, and any compressed gases which do not reach the preset pressure are blocked.

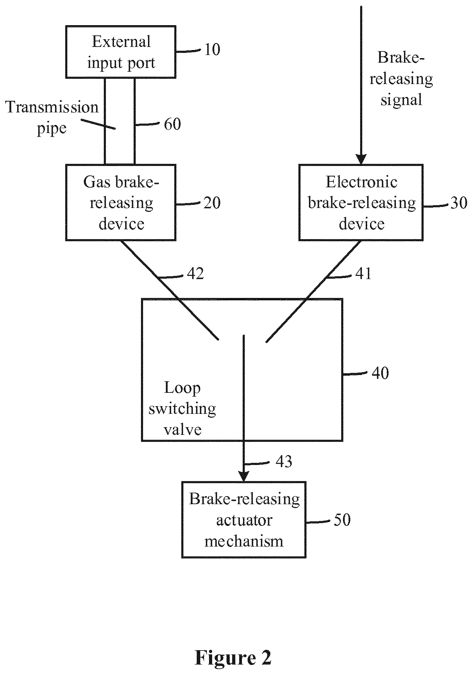

In a case where the external input port 10 is close to the gas brake-releasing device 20, the output end of the external input port 10 may be directly connected to the input end of the gas brake-releasing device 20. While in a case where the external input port 10 is far away from the gas brake-releasing device 20, an external compressed gas transmission pipe 60 may be provided as shown in Figure 2. The external compressed gas transmission pipe 60 has an input end connected to the output end of the external input port, and an output end connected to the input end of the gas brake-releasing device 20, to transmit the compressed gas inputted to the external input port 10 to the gas brake-releasing device 20.

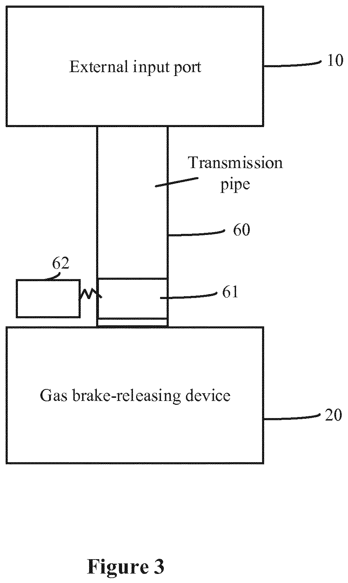

Further, referring to Figure 3, the external compressed gas transmission pipe 60 may be provided with a pressure detector 61 and an emergency power supply 62.

The pressure detector 61 is connected to the external compressed gas transmission pipe 60, and configured to detect and display the pressure of the compressed gas to be transmitted to the gas brake-releasing device 20.

The emergency power supply 62 is connected to the pressure detector 61 to provide electric energy required by the pressure detector 61 for normal operation.

The pressure detector 61 is provided for the reason that an abnormal case is considered where the pressure piston valve is still in the off state when the compressed gas having the preset pressure is inputted, that is, a pressure in the piston valve does not reach the preset pressure. Since transmission loss which may be generated during transmission is generally taken into consideration at the traction locomotive, it can be determined that an abnormality resulting in gas leakage occurs during the transmission if the pressure piston valve is still not turned on. Therefore, the pressure detector is provided to display a true pressure value of a compressed gas to be immediately transmitted to the pressure piston valve.

Further, the pressure detector 61 closer to the gas brake-releasing device 20 leads to displayed measured values closer to the true values taking the normal transmission loss into consideration. However, the pressure detector 61 cannot be arranged too close to the gas brake-releasing device 20, because other possible influencing factors should also be taken into consideration. The pressure detector 61 may be arranged in a most suitable position based on various factors.

Further, since different failed trains generally have different numbers of cars in practices, the pressure piston valves with different lower limit pressures are required, that is, the gas brake-releasing devices with different specifications are required. Multiple pressure piston valves with different lower limit pressures may be arranged to be adaptive to multiple situations, so as to sufficiently ensure that the failed train can be towed to a safe region by a traction locomotive safely and reliably.

The train brake-releasing system also includes an electronic brake-releasing device 30 configured to adjust a compressed gas having an original brake pressure and flowing through the electronic brake-releasing device 30 in response to a received brake-releasing signal to obtain an adjusted brake pressure.

The electronic brake-releasing device 30 is mainly used to process the brake pressure of the transmitted compressed gas in response to a brake-releasing signal transmitted from an upper information processing device to turn the wheels of the train into a brake-releasing state by means of the processed brake pressure. The most important difference between the electronic brake-releasing device 30 and the gas brake-releasing device 20 is that the electronic brake-releasing device 30 is required to be powered with a power supply of a standard or higher voltage and is configured to adjust components in response to the brake-releasing signal.

The train brake-releasing system also includes a loop switching valve 40 configured to connect with the electronic brake-releasing device 30 or the gas brake-releasing device 20 based on an actual operation state of the train. The loop switching valve 40 includes a first input end 41 and a second input end 42. The first input end 41 is electrically connected to an output end of the electronic brake-releasing device 30, and the second input end 42 is connected to the output end of the gas brake-releasing device 20.

The loop switching valve 40 may operate in a first operation mode and a second operation mode.

In the first operation mode, the train is powered normally, the first output end 41 is connected to the electronic brake-releasing device 30 and the second input end 42 is disconnected from the gas brake-releasing device 20.

In the second operation mode, the train is powered abnormally, the second input end 42 is connected to the gas brake-releasing device 20, and the first output end 41 is disconnected from the electronic brake-releasing device 30.

In simple words, the loop switching valve 40 functions as a single-pole double-throw switch, which is connected to different channels under different triggering conditions, to realize corresponding functions by settings or devices provided in the connected channels.

For example, the loop switching valve 40 may be an electromagnetic valve which is connected to the electronic brake-releasing device 30 when a current is supplied; and is connected to the gas brake-releasing device 20 when no current is supplied.

Finally, since the above-described brake-releasing devices are only used to filter or process the transmitted compressed gas, a brake-releasing actuator mechanism 50 is further required, which is connected to an output end 43 of the loop switching valve 40 to perform brake-releasing on the braked wheels of the train by means of the transmitted compressed gas.

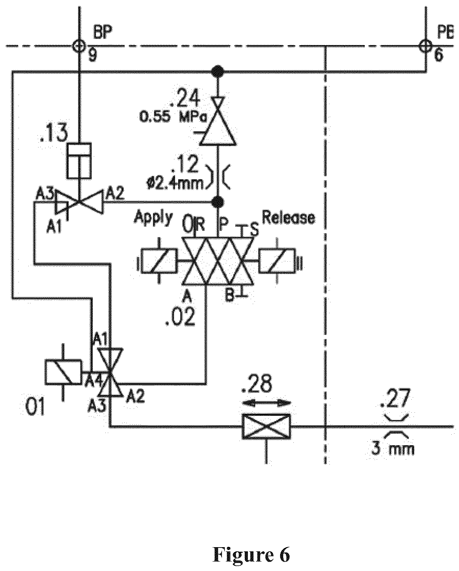

Reference is made to Figure 6, which is a schematic diagram of a circuit of a train brake-releasing system according to an embodiment of the present disclosure. Names and functions of each component in Figure 6 are described below.

The BP9 on the left represents an external train brake pipe, and a pressure piston valve .13 is connected to the external train brake pipe for connecting A2 with A3 and disconnecting A2 from A1 when the compressed gas having the preset pressure is inputted from the external train brake pipe connected with the pressure piston valve .13, so as to perform brake-releasing by means of the inputted compressed gas having the preset pressure, and for connecting A2 with A1 and disconnecting A2 from A3 when no compressed gas having the preset pressure is inputted from the external brake pipe so as to perform parking brake.

The PB6 on the right represents a pipe for transmitting the compressed gas from an air cylinder of the train itself, and a pressure reducing valve .24 is connected to the pipe to limit the pressure of the compressed gas transmitted from the pipe to below 0.55MPa. The .02 represents a double-pulse electromagnetic valve which is configured to control the application and release of parking brake in a case of normal power, and keeps, in a case of a sudden power outage, in the same operation state as the operation state before the sudden power outage.

The .01 below represents an electromagnetic valve, which is in a power failure state and connects the A1 with A3 when the train is out of power. In this way, the electromagnetic valve .01 is in a parking brake releasing state when the .13 is in a parking brake releasing state, and in a parking brake applying state when the .13 is in a parking brake applying state. Generally, the electromagnetic valve is in a powered state and connects A2 with A3 so as to control the release and application of the parking brake through the double-pulse electromagnetic valve.

The pipe from the .01 to the .28 passes through the parking brake cylinder to realize the release and application of the parking brake through the brake cylinder.

Other components and devices in the figure are common or irrelevant to the object of the present disclosure and are not explained herein.

Based on the above technical solution, a train brake-releasing system is provided according to the present disclosure. The train brake-releasing system is additionally provided with a gas brake-releasing device 20 on the basis of an original arrangement of only the original electronic brake-releasing device 30, and an external compressed gas input port 10 and a transmission pipe 60 are provided accordingly, such that the gas brake-releasing device 20 can be activated by means of a compressed gas having a preset pressure provided by a traction locomotive, to release the train in a brake state quickly. In this way, the efficiency of brake-releasing is improved significantly without expending manpower, thereby greatly reducing occurrences of accidents and improving the safety and stability of the train.

Based on the above embodiments, a train is further provided according to the present disclosure. The train includes a train body and a control system, where the control system is provided with a train brake-releasing system described above and can achieve all the advantages of the train brake-releasing system.

The embodiments of the present disclosure are described in a progressive manner, and each embodiment places emphasis on the difference from other embodiments. Therefore, for the same or similar parts between the embodiments, one may refer to the description of other embodiments. For the device according to the embodiments, the device corresponds to the method according to the embodiments. Therefore, the description thereof is simple, and for the related parts, one may refer to the description of the method embodiments.

Those skilled in the art may further realize that the units and algorithm steps of the examples described in the embodiments disclosed herein can be implemented by electronic hardware, computer software, or a combination of the two. To clearly describe Interchangeability between hardware and software, the modules and steps of each example have been generally described in terms of their functionality in the above description. Whether these functions are implemented by hardware or software depends on the specific application and design constraints of the technical solutions. A person skilled in the art may use different methods to implement the described functions for each particular application, but such implementation should not be considered as beyond the scope of the present disclosure.

The principle and embodiments of the present disclosure are described with several specific examples herein. The description of the above-described embodiments is merely used to facilitate understanding the method and core idea of the present disclosure. It should be noted that those skilled in the art can make various improvements and modifications to the present disclosure without departing from the principle of the present disclosure, and such improvements and modifications should fall within the protection scope of the claims of the present disclosure.

It should be noted that a relation term such as "first" and "second" herein is only used to distinguish one entity or operation from another entity or operation, and does not necessarily require or imply that there is an actual relation or sequence among these entities or operations. Additionally, terms such as "include", "comprise" or any other variant are intended to cover a non-exclusive inclusion, so that a process, a method, an object or a device including a series of factors not only includes the series of factors, but also includes other factors not explicitly listed, or also includes inherent factors in the process, the method, the object or the device. Without more limitation, a factor defined in a sentence "include a ..." does not exclude another same factor existing in the process, the method, the object, or the device including the described factor.

## Claims

1. A train brake-releasing system, comprising:
an external input port (10) configured to input a compressed gas having a preset pressure provided from outside;
a gas brake-releasing device (20), wherein an input end of the gas brake-releasing device (20) is connected to an output end of the external input port (10), and the gas brake-releasing device (20) is configured to output the compressed gas flowing through the gas brake-releasing device (20) in a case where a pressure of the compressed gas reaches the preset pressure;
an electronic brake-releasing device (30) configured to adjust a compressed gas having an original brake pressure and flowing through the electronic brake-releasing device (30) in response to a received brake-releasing signal to obtain an adjusted brake pressure; and
a loop switching valve (40) configured to connect with the electronic brake-releasing device (30) or the gas brake-releasing device (20) based on an actual operation state of a train, wherein the loop switching valve (40) comprises a first input end (41) connected to an output end of the electronic brake-releasing device (30) and a second input end (42) connected to an output end of the gas brake-releasing device (20), and the loop switching valve (40) operates in a first operation mode and a second operation mode, wherein
in the first operation mode, the train is powered normally, the first output end (41) is connected to the electronic brake-releasing device (30), and the second input end (42) is disconnected from the gas brake-releasing device (20); and
in the second operation mode, the train is powered abnormally, the second input end (42) is connected to the gas brake-releasing device (20), and the first output end (41) is disconnected from the electronic brake-releasing device (30).

2. The train brake-releasing system according to claim 1, further comprising an external compressed gas transmission pipe (60), wherein:
an input end of the external compressed gas transmission pipe (60) is connected to the output end of the external input port (10), and an output end of the external compressed gas transmission pipe (60) is connected to the input end of the gas brake-releasing device (20), and
the external compressed gas transmission pipe (60) is configured to transmit the compressed gas inputted to the external input port (10) to the gas brake-releasing device (20).

3. The train brake-releasing system according to claim 2, further comprising:
a brake-releasing actuator mechanism (50), connected to an output end of the loop switching valve (40) and configured to perform brake-releasing on braked wheels of the train by means of the transmitted compressed gas.

4. The train brake-releasing system according to claim 3, further comprising:
a pressure detector (61), connected to the external compressed gas transmission pipe (60) and configured to detect and display a pressure of the compressed gas to be transmitted to the gas brake-releasing device (20); and
an emergency power supply (62), connected to the pressure detector (61) and configured to supply electric power required by the pressure detector (61) for normal operation.

5. The train brake-releasing system according to claim 4, wherein the external input port (10) is arranged on a body surface of a predetermined car of the train.

6. The train brake-releasing system according to claim 5, wherein the input end of the external input port (10) points obliquely upward, and the external input port (10) has a preset inclination angle with respect to a horizontal plane.

7. The train braking mitigation system according to claim 6, wherein the output end of the external input port (10) is rotatably connected to the input end of the external compressed gas transmission pipe (60), to make the external input port (10) rotatable with respect to the external compressed gas transmission pipe (60) to a position obliquely downward.

8. The train brake-releasing system according to any one of claims 1 to 7, wherein the loop switching valve (40) is an electromagnetic valve.

9. The train brake-releasing system according to claim 8, wherein the gas brake-releasing device (20) is a pressure piston valve.

10. A train, comprising:
a train body, and
a control system, wherein the control system is provided with the train brake-releasing system according to any one of claims 1 to 9.
